# EUROPEAN PATENT SPECIFICATION

(11) **EP 3 341 644 B1**
(45) Date of publication and mention of the grant of the patent: **24.05.2023**
(21) Application number: 16760019.6
(22) Date of filing: 25.08.2016
(51) Int. Cl.: F17C 1/00, F17C 13/00

(54) **USE OF A LAYER OF A MATERIAL AS A THERMAL INSULATION BARRIER**
VERWENDUNG VON EINER MATERIALSCHICHT ALS THERMISCHE ISOLATIONSSPERRE
UTILISATION D'UNE COUCHE D'UN MATÉRIAU COMME UNE BARRIÈRE D'ISOLATION THERMIQUE

(30) Priority: 27.08.2015 EP 15182637
(43) Date of publication of application: 04.07.2018
(73) Proprietor: Shell Internationale Research Maatschappij B.V., 2596 HR The Hague (NL)
(72) Inventor: ETKIND, Joshua, 2288 GS Rijswijk (NL); SELVARAJ KOUSALYA, Arun, Houston, Texas 77082 (US); ELISSEEVA, Olga, Vladimirovna, 1030 BN Amsterdam (NL)
(74) Representative: Shell Legal Services IP
(86) International application number: PCT/EP2016/070057
(87) International publication number: WO 2017/032823

(56) References cited:
- EP-A1- 2 195 141
- EP-B1- 2 195 141
- WO-A1-2008/068303
- WO-A1-2015/031788
- JP-A- 2006 342 895
- US-A1- 2006 218 940
- US-A1- 2010 146 992
- US-A1- 2014 314 982

## Description

### Field of the Invention

The present invention relates to the use of a layer of material as a thermal insulation barrier on an interior surface of a wall of a containment system for a cryogenic fluid and a containment system comprising a wall of which an internal surface is provided with such a layer of material.

### Background of the Invention

Fluid barriers for use under cooling conditions, in particular cryogenic conditions such as storage tanks and pipelines, are intended to prevent the egress of the fluid towards materials behind the barrier. Typically, conventional fluid barriers are based on special materials having similar properties such as nickel-steel or special fibre-reinforced composite materials. Examples of such special fibre-reinforced composite materials include those composed of thermosetting plastic matrix materials (such as epoxy and polyurethanes) reinforced by structural fibres such as graphite, glass, such as S2 glass and E glass, and Ultra High Molecular Weight polyethylene.

US20140314982 provides articles and methods featuring substrates with thin, uniform polymeric films grafted (e.g., covalently bonded) thereupon. The resulting coating provides significant reductions in thermal resistance, drop shedding size, and degradation rate during dropwise condensation of steam compared to existing coatings. Surfaces that promote dropwise shedding of low-surface tension condensates, such as liquid hydrocarbons, are also demonstrated.

A problem associated with known containment systems that are applied under cryogenic conditions is that the fluid barrier does not adequately function as a thermal insulation barrier to the incoming heat flux from the surrounding environment of the storage or transport system. As a result the temperature of the fluid to be cooled or to be kept under cryogenic conditions will increase. The incoming heat flux results in an undesired pressure increase and/or increased rate of boil off gas.

The problem of incoming heat flux and boil off gas is in particular present when storing and transporting liquefied gas, including but not limited to liquefied natural gas (LNG), liquefied nitrogen, propane, oxygen, carbon dioxide and hydrogen.

It is an object of the present invention to avoid or minimize the above problems.

### Summary of the Invention

It has now been found that these problems can be dealt with when use is made of a layer of a particular material which is applied on an interior surface of a wall of a containment system for a cryogenic fluid, wherein the layer of the material has a contact angle which is at least 150° for the cryogenic fluid.

The cryogenic fluid may be one of liquid natural gas (LNG), liquefied nitrogen, liquefied propane, liquefied oxygen, liquefied carbon dioxide and liquefied hydrogen.

Liquid natural gas is a liquefied hydrocarbon comprising gas comprising at least 50 mol% methane, preferably at least 75 mol% methane and more preferably more than 90% of methane.

Liquefied nitrogen, liquefied propane, liquefied oxygen, liquefied carbon dioxide and liquefied hydrogen comprise at least 50 mol% of the indicated component, preferably at least 75 mol% of the indicated component more preferably more than 90% of the indicated component.

The term cryogenic is used to refer to temperatures below -30 °C, more preferably at temperatures below -110 °C, below -130 °C, or even below -150 °C or below -160 °C.

The layer functions as a thermal insulation barrier by virtue of a surface energy that effectively repels the cryogenic fluid, thereby creating a vapor or air layer between the cryogenic fluid and the layer of material. The vapour or air layer provides an insulating effect.

Accordingly, the present invention relates to the use of a layer of a material as a thermal insulation barrier on an interior surface of a wall of a containment system for a cryogenic liquid in accordance with claim 1, wherein the layer has a contact angle which is at least 150° for the liquid.

According to another aspect, the invention provides a containment system for a cryogenic liquid in accordance with claim 10.

The present invention provides an improved thermal insulation barrier, which can lead to a reduction of boil-off rates and thus a prolonged storage time for the cryogenic fluid, extended transport ranges, reduced heat ingress, reduced need for re-liquefaction capacity during transport, reduced weight the containment systems as further thermal insulation layers can be minimized or omitted.

### Detailed description of the Invention

The layer of the material to be used in accordance with the present invention has a contact angle which is at least 150° for the fluid.

The contact angle of a surface for a specific fluid is governed by the type of material used, in particular the surface energy of the material in combination with the micro and/or nano-scaled morphology or structuring of the layer of the material and the surface tension of the fluid.

Preferably, the material has a surface energy no greater than 25 mJ/m², more preferably no greater than 20 mJ/m² and even more preferably no greater than 15 mJ/m² or even no greater than 10 mJ/m², wherein mJ/m² is milliJoule per square meter. These values for the surface energy are in particular advantageous when the fluid is a cryogenic fluid, such as a liquid natural gas.

Preferably the fluid, and in particular under cryogenic conditions, has a surface tension of less than 80 mN/M, preferably less than 30 mM/m and more preferably less than 15 mN/m.

In the context of the present invention, a contact angle is defined as the interior angle formed by a smooth substrate and the tangent to the drop interface at the intersection of solid and liquid/vapor interfaces.

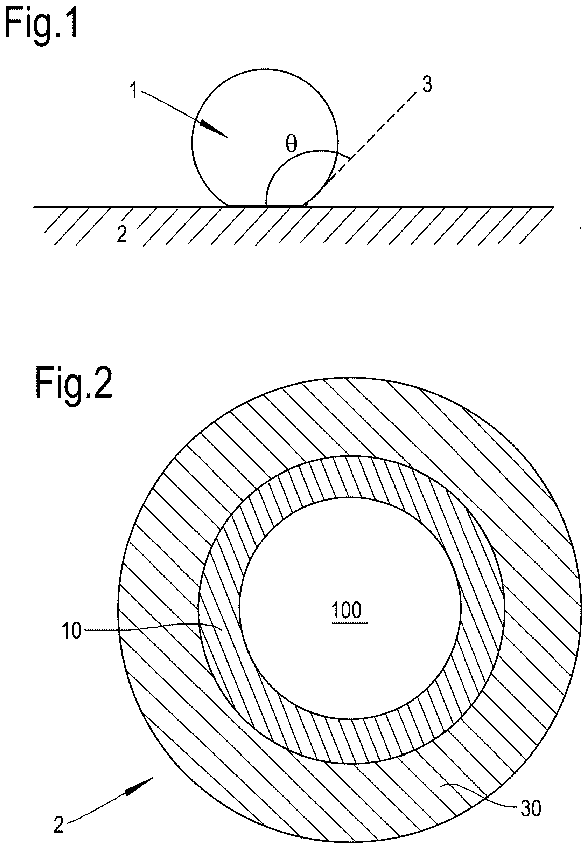

In this respect reference is made to Figure 1 in which a contact angle e is shown between a liquid droplet 1 and a solid surface 2 inside the interior 3 of a containment system.

In the case of heterogeneous rough surfaces such as when the layer of material is provided with a micro and/or nano-scaled morphology or structure, the contact angle e measured based on the above definition is referred to as the apparent contact angle. The apparent contact angle e is measured with respect to the surface plane of the layer of material as if it wasn't provided with a micro and/or nano-scaled morphology or structure.

The real contact angle of the micro- and/or nanostructures of the rough surfaces are in general different than the apparent contact angle. Adopting common convention, the surface wetting nature of rough surfaces is quantified by the same definition as a smooth surface.

In accordance with the present invention the contact angle is determined using the telescopic contact angle goniometer. Different measurement techniques may be used to measure the actual contact angle, including measurement techniques defined by appropriate iso-standards.

Preferably, the contact angle may be determined according to ASTM D7334 - 08(2013) - 'Standard Practice for Surface Wettability of Coatings, Substrates and Pigments by Advancing Contact Angle Measurement', obtainable via https://www.astm.org/Standards/D7334.htm , for instance by viewing the sessile drop (as specified in the standard), through a microscope fitted with a goniometer scale for direct measurement of the angle.

The contact angle is at least 150° for the fluid. Preferably, the contact angle is above 155° for the fluid, more preferably the contact angle is above 160° for the fluid and even more preferably the contact angle is above 165° for the fluid.

The material may be a superoleophobic material, i.e. a material that has a very low affinity for oils. The material may also be a superomniphobic coating having a very low affinity for oils and water.

The material may be a composite material or single polymer composite such as described in patent application WO2008068303, hereby incorporated by reference.

The composite material may be used as a fluid barrier under cryogenic conditions, the composite material having:
(a) a tensile Young's modulus of less than 50 Gpa at ambient conditions; and
(b) a tensile strain at break of at least 5% at ambient conditions.

A composite material is an engineered material made from two or more constituent materials with different physical or chemical properties and which remain separate and distinct on a macroscopic level within the finished structure. The tensile Young's modulus value of the composite material may depend on the relative amounts of the materials used. The person skilled in the art will readily understand how to vary the volume fractions of the various components of the composite material to tailor the desired properties.

Preferably, the tensile Young's modulus is determined according to DIN EN ISO 527 at ambient conditions, that is standard atmospheric conditions according to ISO 554, in particular the recommended atmospheric conditions i.e. at 23 °C, 50% relative humidity and at a pressure between 86 and 106 kPa. Preferably the tensile strain at break at ambient conditions is above 80, more preferably above 10%, and even more preferably above 150. Typically, the tensile strain at break at ambient conditions is not more than 750. The tensile strain at break is determined according to DIN EN ISO 527 at ambient conditions.

In accordance with the present invention the interior surface of the wall will be exposed to the fluid, in particular a cryogenic fluid. The contact angle of at least 150° stimulates formation of a stable 'Cassie' wetting state wherein a micro-vapor layer is formed between the interior surface and the cryogenic fluid. Formation of such a vapor or air layer minimizes the most conductive pathway for heat transfer and enhances thermal insulation.

The (superoleophobic) material to be applied in accordance with the present invention can be chosen from a wide variety of materials. Suitable (superoleophobic) materials include those obtained by grafting of fluorinated functional groups on polymerizable moieties, inorganic nanoparticles functionalized with organic fluoropolymers, micro-textured surfaces with re-entrant surface morphology functionalized with fluorinated compounds, fluorinated ethylene dioxypyrrole derivatives, ZnO nanoparticles blended with a waterborne perfluoroacrylic polymer emulsion using cosolvents, silicon etched with fluoro-silane functionalization, anodically oxidized aluminum with fluorinated monoalkyl phosphate functionalization, silicon wafers subjected to lithography and followed by deep reactive ion etching (DRIE), for instance the Bosch process followed by molecular vapor deposition of tridecafluoro-1,1,2,2-tetrahydrooctyltrichlorosilane, soot of carbon particles coated with silica shell followed by calcination, spraycoated blend of poly(methyl methacrylate) (PMMA) and a low surface energy molecule such as flurodecyl polyhedral oligomeric silsesquioxane, hydrolysed flurodecyl polyhedral oligomeric silsesquioxane and hydrolysed fluoroalkyl silane, poly(dimethylsiloxane) surface with inverse-trapezoidal microstructures, porous silicon films with overhang structures similar to reentrant cavities, and fluoroalkyl functional silica.

Preferred (superoleophobic) materials to be used in accordance with the present invention include those obtained by grafting of fluorinated functional groups on polymerizable moieties, inorganic nanoparticles functionalized with organic fluoropolymers and micro-textured surfaces with re-entrant surface morphology functionalized with fluorinated compounds.

The layer of coating to be used in accordance with the present invention can be formed by means of bottom-up processes and top-down processes. Top-down processes are based on lithographic techniques for patterning of substrates, whereas in bottom-up processes micro-/nano-structures are fabricated atop the base substrate through self-structuralization processes. Preferably, use is made of a bottom-up process.

Suitable bottom-up processes include spin-coating process, dip-coating processes, spray coating/casting processes, electro-spinning processes, brushing processes, chemical vapour deposition processes, electrodeposition processes, electrochemical polymerization and deposition processes, vapour phase polymerization processes, plasma treatment processes, and layer-by-layer processes.

Preferred bottom-up processes include spray coating, chemical vapour deposition, electrochemical polymerization and deposition, and plasma treatment processes.

More preferably, the bottom-up process is a spray coating or a chemical vapour deposition process.

Suitable top-down processes include lithographic processes, plasma etching process, chemical etching processes, ion etching processes, and anodization processes.

Preferred top-down processes are lithographic and chemical/plasma etching processes. The thickness of the layer of the material to be used in accordance with the present invention is preferably less than 1 um.

The layer of the material to be used in accordance with the present invention is suitably applied under cooling conditions. Preferably, the present layer of material is used under cryogenic conditions, that is below -30 °C, more preferably at temperatures below -100 °C, or even below -150 °C. Such cryogenic conditions are suitable for storing and transporting liquefied natural gas (LNG).

Hence, the fluid in accordance with the present invention is preferably a cryogenic fluid. For the purposes of this specification a cryogenic liquid is a liquefied gas that has been liquefied by lowering the temperature to cryogenic conditions. A cryogenic fluid includes a cryogenic liquid, a gas that is kept under cryogenic conditions and a supercritical fluid that is kept under cryogenic conditions.

The fluid may be liquid natural gas (LNG), which is a liquefied hydrocarbon comprising gas comprising at least 50 mol% methane, preferably at least 75 mol% methane and more preferably more than 90% of methane. LNG may further comprise heavier carbons, such as ethane, propane, (iso-)butane, (iso-)pentane. Typically, the mol fractions of heavier components are smaller than the mol fractions lighter components.

The methane comprising stream may further comprise a small fraction of nitrogen.

The cryogenic fluid may for instance be liquid natural gas at atmospheric pressure (typically at - 160°C) or compressed liquid natural gas having a pressure above atmospheric pressure, typically a pressure above 8 bar, for instance 15 bar (with a corresponding temperature of around - 115°C).

Suitably, the material has a tensile Young's modulus of less than 50 GPa as determined according to DIN EN ISO 527 at ambient conditions.

Preferably, the material has a coefficient of thermal expansion less than 250 * 10⁻⁶ m/m°C at 40 °C.

More preferably, the material has a coefficient of thermal expansion less than 250 * 10⁻⁶ m/m°C at 40 °C in the direction of the orientation of the material.

Further, preferably, the composite material has a coefficient of thermal expansion less than 100 * 10 ⁻⁶ m/m°C at -60 °C. More preferably, the composite material is oriented and the composite material has a coefficient of thermal expansion less than 100 * 10⁻⁶ m/m°C at 40 °C in the direction of the orientation of the composite material.

The coefficient of thermal expansion can suitably be determined according to ISO11359-2 in the temperature range between -60 and +70 °C by thermal mechanical analysis (TMA).

The present invention provides the use of the material as a thermal insulation barrier in the containment of a cryogenic fluid, such as a liquefied gas, including but not limited to LNG, liquefied nitrogen, propane, oxygen, carbon dioxide and hydrogen. Such use can be temporary or permanent, onshore or off-shore, above ground, above water, under water or underground, or a combination thereof. Such uses can also be up-stream and/or downstream of other apparatus, devices, units or systems of any part of a plant or facility for containing, storing, processing, transporting and/or transferring a cryogenic fluid. This includes one or more of a liquefaction plant, a re-gasifying plant, an export, loading, transport, unloading, import or end-use facility, or a part thereof. Such uses include but are not limited to the following applications; Storage and transportation of cryogenic fluids (pure or blended) for the use at temperatures below -30 °C, preferably at temperatures below - 100 °C, more preferably at temperatures below -150 °C including tanks (i.e. bulk storage) at export and import terminals, shipping, and transfer elements such as pipes and hoses; the containment of cryogenic fluids in onshore and offshore tanks of any geometric shape including (vertical) cylindrical tanks, prismatic tanks, ellipsoidal tanks, and spherical tanks; the onshore and offshore storage or transportation of cryogenic fluids in containers, portable containers, shop-fabricated containers, portable tanks and cargo tanks; pressurized or non-pressurized vessels for the temporary or permanent storage of cryogenic fluids; pressurized or non-pressurized vessels for the transport (on land, by sea or air by any means) of cryogenic fluids of any geometric shape including but not limited to (vertical) cylindrical, prismatic, ellipsoidal, spherical shapes); flowing transport or transfer in flexible or rigid tubes including onshore and offshore, above water, in water or underwater, including pipes, pipe sections, pipelines, piping systems, hoses, risers and associated equipment and detailing.

The present invention also provides a containment system for a fluid, in particular a cryogenic fluid, comprising a wall having an interior surface and an exterior surface, wherein the at least a portion of the interior surface is provided with a layer of the material as hereinbefore defined.

The present invention also provides such a containment system comprising a cryogenic fluid.

Suitably, at least 250 of the interior surface is covered with the layer of material. Preferably, at least 50% and more preferably at least 750 of the interior surface is covered with the layer of material. Most preferably, the entire interior surface is covered with the layer of material.

The containment system preferably comprises one or more of the group comprising: a container, a tank, a pipe, a vessel, a heat exchanger and a conduit.

Examples of such containment systems and their use are hereinbefore described. Pipes include pipelines or pipe sections, being continuous or in discrete lengths. One particular example of a containment system is a container for storing a cryogenic fluid, the container at least comprising:
- a load bearing structural outer shell;
- on the inside of the outer shell one or more fluid barriers comprising a layer of the material as herein before defined.

The containment system may be an on-shore tank or an offshore tank or may be a barge or vessel comprising such a tank for storing or transporting liquid natural gas (LNG). The tank may be a membrane tank or a spherical independent tank, also known as MOSS type tanks.

The membrane tank comprises a membrane, being a thin metallic material such as stainless steel or nickel alloy (Invar) to contain the liquid. The membrane is supported by a wooden or polyurethane foam insulation, which is attached to the steel inner hull of the vessel.

Spherical independent tanks may be constructed of aluminium segments which are welded to for two hemispheres. A central band connects the tank to the hull of the vessel.

The containment system may be an above the ground cryogenic (LNG) storage tank consisting of an outer concrete tank equipped with a thermal corner protection and an inner steel tank with a layer of thermal insulation between the two tanks. The inner tank, typically constructed from a 9% Ni steel, contains liquids at cryogenic temperatures. The outertank, built from reinforced concrete for the bottom slab and pre-stressed concrete for the side walls, is isolated from the cryogen by the steel walls of the inner tank and the insulation. The insulation at the tank base is made of multiple layers of high-density load bearing rigid cellular glass while the side-wall insulation is provided by loosefilled perlite and fiber glass blankets. The thickness of the insulation is determined so as to minimize or limit heat gain to the tank to accepted levels. According to an embodiment, the interior surface that is directly exposed to the cryogenic fluid is coated with a material as descibed here to enhance and/or provide additional thermal insulation. The thickness of the coating can range from a few hundreds of nanometers to less than a millimeter, depending upon the cryogenic fluid that is to be used.

In case a micro and/or nano-scaled morphology is provided, the entrapped air pockets will be present between the cryogenic liquid and the material, thus reducing the most conductive pathway for heat transfer. Air pockets have a low thermal conductivity ranging from 0.009 W/mK at 100 K (-173.15 C) to 0.017 W/mK at 200 K (-73.15 C), which increases the thermal resistance and minimizes heat ingress. Similarly, low thermal conductivity of stable vapor layer formed in the interstitial structures of the material enhances the thermal resistance and reduces the incoming heat flux.

Another particular example of a containment system is a pipe for transporting a cryogenic fluid, at least comprising: a load bearing structural outer shell, preferably from a plastic material; on the inside of the outer shell a fluid barrier comprising a layer of the material as hereinbefore defined.

In particular, such a pipe could comprise: one or more concentric inner fluid barriers around a central fluid conduit; an outer concentric layer: and optionally at least one annulus between at least one inner fluid barrier and the outer concentric layer, said annulus or annuli being filled with one or more thermal insulants.

Such a pipe could comprise two, three or four inner fluid barriers, with an annulus between each neighbouring set of two inner fluid barriers and between the outermost inner fluid barrier and the outer concentric layer, preferably at least two of the annuli being filled with two or more different thermal insulants.

Suitable thermal insulants are known in the art, and include various foams and gels, such as microgel or microtherm (a microporous mixture of ceramic powder and fibres).

Suitably, the containment system is a container for storing a cryogenic fluid or a pipe for transporting a cryogenic fluid.

The material may be the result of surface chemistry. On the other hand, the material may derive some surface wetting behaviour from the mechanical or structural configuration or pattern of the surface. Characteristics to consider when selecting the material may include adhesion to the substrate (e.g., carbon steel), contact angle, temperatures and pressures under which the coating can operate, thickness, and how the coating is applied. The material will have water/cryogenic fluid repelling properties, as a result of which the material aids the formation of the thermally resistant micro-vapor layer on the interior surface. As mentioned above, the material may be a superoleophobic material.

The use of the layer of material on the interior surface allows for improved thermal insulation.

The thickness of the layer of the material to be used in accordance with the present invention is preferably less than 1 um.

The thickness of the layer of the material may vary over the interior surface. Suitably, the thickness variation is less than 200.

The layer of the material may have a texture comprising micro- and/or nano-scale features (e.g., ridges, grooves, pores, cavities posts, re-entrant cavities, bumps, and/or protrusions, patterned and/or unpatterned).

The term micro- and/or nano-scale features is used to indicate that the dimensions of the features, i.e. the height and width of the ridges, grooves, protrusions, bumps and the diameter of the pores and cavities, are in the range of 1 nm and 500 microns.

The layer of material may have an exposed surface with a surface energy which is at most 25 mJ/m². Suitably, the exposed surface has a surface energy which is at most 10 mJ/m².

The fluid, in particular cryogenic fluid, to be used in accordance with the present invention suitably has a surface tension of less than 80 mN/m, preferably less than 30 mN/m, and more preferably less than 15 mN/m.

Figure 2 schematically shows a cross-sectional view of a pipe 2 for transporting cryogenic liquids such as LNG, LPG, liquid propane and liquid nitrogen. The pipe 2 comprises a wall 30, and a layer of material 10 as described above applied onto the interior surface of the wall 30, concentrically arranged around a central fluid conduit 100.

The wall 30 may be made from a metallic material such as nickel steel or concrete, but is preferably made from a stiff plastic material such as carbon reinforced epoxy material or glass reinforced epoxy material.

The layer of material 10 is made from a material having a tensile Young's modulus of less than 50 GPa.

The coating when applied on the interior surface of a single-walled tank shall provide the same thermal insulation properties of expensive double-walled cryogenic tanks. In such a case, the usage of will result in cost benefits.

The person skilled in the art will understand that the present invention can be carried out in many various ways without departing from the scope of the appended claims.

## Claims

1. Use of a layer of a material (10) as a thermal insulation barrier on an interior surface of a wall (30) of a containment system (2) for a cryogenic liquid, wherein the cryogenic liquid is one of liquid natural gas (LNG), liquefied nitrogen, liquefied propane, liquefied oxygen, liquefied carbon dioxide and liquefied hydrogen, wherein the layer of the material (10) has a contact angle which is at least 150° for the cryogenic liquid, wherein a vapor or air layer is created between the cryogenic liquid and the layer of material (10) when the containment system (2) contains the cryogenic liquid.

2. Use according to claim 1, wherein the layer of the material (10) has a contact angle greater than 155° for the cryogenic liquid.

3. Use according to claim 1 or 2, wherein the layer of the material (10) has a contact angle greater than 160° or greater than 165° for the cryogenic liquid.

4. Use according to any one of claims 1-3, wherein the material is selected from the group consisting of those obtained by grafting of fluorinated functional groups on polymerizable moieties, inorganic nanoparticles functionalized with organic fluoropolymers and micro-textured surfaces with re-entrant surface morphology functionalized with fluorinated compounds.

5. Use according to any one of claims 1-4, wherein the layer of material (10) has a thickness of less than 1 µm.

6. Use according to any one of the preceding claims, wherein the material has a surface energy no greater than 25 mJ/m², preferably no greater than 20 mJ/m² and even more preferably no greater than 10 mJ/m².

7. Use according to any one of the preceding claims, wherein the layer of material (10) is provided with a micro and/or nano-scaled morphology.

8. Use according to any one of the preceding claims, wherein the material is a superoleophobic material.

9. Use according to any one of the preceding claims, wherein the cryogenic liquid is liquid natural gas.

10. A containment system for a cryogenic liquid comprising a wall (30) defining an interior space for containing the liquid, the wall having an interior surface facing the interior space,
wherein the containment system (2) contains the cryogenic liquid,
wherein at least a portion of the interior surface is provided with a layer of material (10) as a thermal insulation barrier having a contact angle which is at least 150° for the cryogenic liquid, wherein the cryogenic liquid is one of liquid natural gas (LNG), liquefied nitrogen, liquefied propane, liquefied oxygen, liquefied carbon dioxide and liquefied hydrogen,
wherein a vapor or air layer is present between the cryogenic liquid and the layer of material (10) when the containment system (2) contains the cryogenic liquid.

11. Containment system according to claim 10, which containment system (2) is a container for storing the cryogenic liquid or a pipe for transporting the cryogenic liquid.

12. Containment system according to any one of the claims 10 or 11, wherein the cryogenic liquid has a temperature of less than -110°C or less than -130°C or less than -160°C.

## Patentansprüche

1. Verwendung einer Schicht eines Materials (10) als eine Wärmeisolierungsbarriere auf einer Innenoberfläche einer Wand (30) eines Einschlusssystems (2) für eine kryogene Flüssigkeit, wobei die kryogene Flüssigkeit eines von verflüssigtem Erdgas (LNG), verflüssigtem Stickstoff, verflüssigtem Propan, verflüssigtem Sauerstoff, verflüssigtem Kohlendioxid und verflüssigtem Wasserstoff ist, wobei die Schicht des Materials (10) einen Kontaktwinkel aufweist, der mindestens 150° für die kryogene Flüssigkeit ist, wobei eine Dampf- oder Luftschicht zwischen der kryogenen Flüssigkeit und der Schicht des Materials (10) erzeugt wird, wenn das Einschlusssystem (2) die kryogene Flüssigkeit einschließt.

2. Verwendung nach Anspruch 1, wobei die Schicht des Materials (10) für die kryogene Flüssigkeit einen Kontaktwinkel aufweist, der über 155° ist.

3. Verwendung nach Anspruch 1 oder 2, wobei die Schicht des Materials (10) für die kryogene Flüssigkeit einen Kontaktwinkel aufweist, der über 160° oder über 165° ist.

4. Verwendung nach einem der Ansprüche 1 bis 3, wobei das Material aus der Gruppe ausgewählt ist, bestehend aus denjenigen, die durch Pfropfen fluorierter funktioneller Gruppen auf polymerisierbaren Molekülteilen erhalten werden, anorganischen Nanopartikeln, die mit organischen Fluorpolymeren funktionalisiert sind, und mikrostrukturierten Oberflächen mit wieder eintretender Oberflächenmorphologie, die mit fluorierten Verbindungen funktionalisiert sind.

5. Verwendung nach einem der Ansprüche 1 bis 4, wobei die Schicht des Materials (10) eine Dicke von weniger als 1 µm aufweist.

6. Verwendung nach einem der vorstehenden Ansprüche, wobei das Material eine Oberflächenenergie aufweist, die nicht über 25 mJ/m², vorzugsweise nicht über 20 mJ/m² und noch mehr bevorzugt nicht über 10 mJ/m² ist.

7. Verwendung nach einem der vorstehenden Ansprüche, wobei die Schicht des Materials (10) mit einer mikro- und/oder nanoskalierten Morphologie versehen ist.

8. Verwendung nach einem der vorstehenden Ansprüche, wobei das Material ein superoleophobes Material ist.

9. Verwendung nach einem der vorstehenden Ansprüche, wobei die kryogene Flüssigkeit flüssiges Erdgas ist.

10. Einschlusssystem für eine kryogene Flüssigkeit, umfassend eine Wand (30), die einen Innenraum zum Einschließen der Flüssigkeit definiert, wobei die Wand eine Innenoberfläche aufweist, die dem Innenraum zugewandt ist,
wobei das Einschlusssystem (2) die kryogene Flüssigkeit einschließt,
wobei mindestens ein Abschnitt der Innenoberfläche mit einer Schicht des Materials (10) als eine Wärmeisolierungsbarriere versehen ist, die einen Kontaktwinkel aufweist, der mindestens 150° für die kryogene Flüssigkeit ist, wobei die kryogene Flüssigkeit eines von verflüssigtem Erdgas (LNG), verflüssigtem Stickstoff, verflüssigtem Propan, verflüssigtem Sauerstoff, verflüssigtem Kohlendioxid und verflüssigtem Wasserstoff ist,
wobei eine Dampf- oder Luftschicht zwischen der kryogenen Flüssigkeit und der Schicht des Materials (10) vorhanden ist, wenn das Einschlusssystem (2) die kryogene Flüssigkeit einschließt.

11. Einschlusssystem nach Anspruch 10, wobei das Einschlusssystem (2) ein Behälter zum Lagern der kryogenen Flüssigkeit oder eine Leitung zum Transportieren der kryogenen Flüssigkeit ist.

12. Einschlusssystem nach einem der Ansprüche 10 oder 11, wobei die kryogene Flüssigkeit eine Temperatur von weniger als -110 °C oder weniger als -130 °C oder weniger als -160 °C aufweist.

## Revendications

1. Utilisation d'une couche d'un matériau (10) comme barrière d'isolation thermique sur une surface intérieure d'une paroi (30) d'un système de confinement (2) pour un liquide cryogénique, le liquide cryogénique étant l'un parmi du gaz naturel liquéfié (GNL), de l'azote liquéfié, du propane liquéfié, de l'oxygène liquéfié, du dioxyde de carbone liquéfié et de l'hydrogène liquéfié, la couche du matériau (10) ayant un angle de contact qui est au moins 150° pour le liquide cryogénique, une couche de vapeur ou d'air étant créée entre le liquide cryogénique et la couche de matériau (10) lorsque le système de confinement (2) contient le liquide cryogénique.

2. Utilisation selon la revendication 1, dans laquelle la couche du matériau (10) a un angle de contact supérieur à 155° pour le liquide cryogénique.

3. Utilisation selon la revendication 1 ou 2, dans laquelle la couche du matériau (10) a un angle de contact supérieur à 160° ou supérieur à 165° pour le liquide cryogénique.

4. Utilisation selon l'une quelconque des revendications 1 à 3, dans laquelle le matériau est choisi dans le groupe constitué par ceux obtenus par greffage de groupes fonctionnels fluorés sur des fragments polymérisables, des nanoparticules inorganiques fonctionnalisées avec des polymères fluorés organiques et des surfaces microtexturées à morphologie de surface rentrante fonctionnalisée avec des composés fluorés.

5. Utilisation selon l'une quelconque des revendications 1 à 4, dans laquelle la couche de matériau (10) a une épaisseur inférieure à 1 µm.

6. Utilisation selon l'une quelconque des revendications précédentes, dans laquelle le matériau a une énergie de surface ne dépassant pas 25 mJ/m², de préférence ne dépassant pas 20 mJ/m² et encore plus préférablement ne dépassant pas 10 mJ/m².

7. Utilisation selon l'une quelconque des revendications précédentes, dans laquelle la couche de matériau (10) est pourvue d'une morphologie micro et/ou nanométrique.

8. Utilisation selon l'une quelconque des revendications précédentes, dans laquelle le matériau est un matériau superoléophobe.

9. Utilisation selon l'une quelconque des revendications précédentes, dans laquelle le liquide cryogénique est du gaz naturel liquéfié.

10. Système de confinement pour un liquide cryogénique comprenant une paroi (30) définissant un espace intérieur pour contenir le liquide, la paroi ayant une surface intérieure faisant face à l'espace intérieur,
le système de confinement (2) contenant le liquide cryogénique,
au moins une partie de la surface intérieure étant pourvue d'une couche de matériau (10) comme barrière d'isolation thermique ayant un angle de contact qui est au moins 150° pour le liquide cryogénique, le liquide cryogénique étant l'un parmi du gaz naturel liquéfié (GNL), de l'azote liquéfié, du propane liquéfié, de l'oxygène liquéfié, du dioxyde de carbone liquéfié et de l'hydrogène liquéfié,
une couche de vapeur ou d'air étant présente entre le liquide cryogénique et la couche de matériau (10) lorsque le système de confinement (2) contient le liquide cryogénique.

11. Système de confinement selon la revendication 10, lequel système de confinement (2) est un récipient pour stocker le liquide cryogénique ou un tuyau pour transporter le liquide cryogénique.

12. Système de confinement selon l'une quelconque des revendications 10 ou 11, dans lequel le liquide cryogénique a une température inférieure à -110 °C ou inférieure à -130 °C ou inférieure à -160 °C.
